# EUROPEAN PATENT SPECIFICATION

(11) **EP 1 843 425 B1**
(45) Date of publication and mention of the grant of the patent: **28.07.2010**
(21) Application number: 07105203.9
(22) Date of filing: 29.03.2007
(51) Int. Cl.: H01M 8/10

(54) **A membrane-electrode assembly for a fuel cell, a method of preparing the same and a fuel cell system including the same**
Membranelektrodenanordnung für eine Brennstoffzelle, Verfahren zu dessen Herstellung und Brennstoffzellensystem damit
Ensemble électrode-membrane pour une pile à combustible, procédé de préparation correspondant et système de pile à combustible comprenant celui-ci

(30) Priority: 04.04.2006 KR 20060030527
(43) Date of publication of application: 10.10.2007
(73) Proprietor: Samsung SDI Co., Ltd., Gyeonggi-do (KR)
(72) Inventor: Han, Sang-II, Kyunggi-do (KR); Son, In-Hyuk, Kyunggi-do (KR)
(74) Representative: Grey, Ian Michael

(56) References cited:
- JP-A- 7 161 368
- US-A- 5 246 792
- US-A1- 2005 112 435
- US-A1- 2005 181 285
- WANG ET AL: "Improvement of direct methanol fuel cell performance by modifying catalyst coated membrane structure" ELECTROCHEMISTRY COMMUNICATION, ELSEVIER, AMSTERDAM, NL, vol. 7, no. 10, October 2005 (2005-10), pages 1007-1012, XP005082470 ISSN: 1388-2481
- CHO ET AL: "A coated Nafion membrane with a PVdF copolymer/Nafion blend for direct methanol fuel cells (DMFCs)" SOLID STATE IONICS, NORTH HOLLAND PUB. COMPANY. AMSTERDAM, NL, vol. 176, no. 39-40, December 2005 (2005-12), pages 3027-3030, XP005204393 ISSN: 0167-2738
- BESSARABOV D ET AL: "Solid polyelectrolyte (SPE) membranes with textured surface" JOURNAL OF MEMBRANE SCIENCE, ELSEVIER SCIENTIFIC PUBL.COMPANY. AMSTERDAM, NL, vol. 244, no. 1-2, 15 November 2004 (2004-11-15), pages 69-76, XP004619445 ISSN: 0376-7388

## Description

The present invention relates to a method of preparing a membrane-electrode assembly for a fuel cell that provides a membrane-electrode assembly having improved power characteristics due to an increased reaction surface area between a polymer electrolyte membrane and a catalyst layer.

A fuel cell is a power generation system for producing electrical energy through an electrochemical redox reaction of an oxidant and hydrogen, using a hydrocarbon-based material, such as, methanol, ethanol, or natural gas.

Such a fuel cell is a clean energy source that can replace fossil fuels. It includes a stack composed of unit cells, and produces various ranges of power. Since it has a four to ten times higher energy density than a small lithium battery, it has been highlighted for use as a small portable power source.

Exemplary fuel cells include a polymer electrolyte membrane fuel cell (PEMFC) and a direct oxidation fuel cell (DOFC). A direct oxidation fuel cell can be a direct methanol fuel cell that uses methanol as a fuel.

A polymer electrolyte fuel cell has the benefit of a high energy density, but it also has drawbacks in that it requires volatile hydrogen gas, that is produced in accessory facilities, such as, a fuel reforming processor for reforming methane or methanol, natural gas, and the like.

On the contrary, a direct oxidation fuel cell has lower energy density than that of the polymer electrolyte fuel cell, but it has the advantages of using a less volatile fuel that can be produced without additional fuel reformers, and operating at room temperature, due to its lower operating temperature.

In the above fuel cell, the stack that generates electricity includes a plurality of unit cells stacked in multiple layers. Each unit cell is formed of a membrane-electrode assembly (MEA), and a separator (also referred to as a bipolar plate). The membrane-electrode assembly has an anode (also referred to as a fuel electrode or an oxidation electrode), and a cathode (also referred to as an air electrode or a reduction electrode), attached to each other with an electrolyte membrane in between.

A fuel is supplied to the anode and absorbed in a catalyst thereof. The fuel is oxidized at the catalyst to produce protons and electrons. The electrons are transferred into the cathode via an external circuit, and the protons are transferred into the cathode through a polymer electrolyte membrane. An oxidant is supplied to the cathode, and the oxidant, protons, and electrons are reacted on a catalyst of the cathode, to produce electricity and water.

One embodiment of the present invention provides a method of preparing a membrane-electrode assembly for a fuel cell that can improve the power characteristics of a fuel cell, due to an increased reaction surface area between a polymer electrolyte membrane and a catalyst layer.

It is known from Wang et al: "Improvement of direct methanol fuel cell performance by modifying catalyst coated membrane structure" Electrochemistry Communication, Elsevier, Amsterdam, NL, vol. 7, no. 10 October 2005 (2005-10), (pages 1007-1012, XP005082470 ISSN: 1388-2481) to provide a method of preparing a membrane-electrode assembly for a fuel cell comprising preparing a polymer electrolyte membrane, having a first endothermic peak and comprising a first proton conductive polymer substrate, by forming a coating layer comprising a second proton conductive polymer having a second endothermic peak on at least one side of the first proton conductive polymer substrate, the first endothermic peak occurring in a higher temperature range than the second endothermic peak, as measured by a differential scanning calorimeter, and forming an average surface roughness on the coating layer before assembling the polymer electrolyte membrane between an anode and a cathode.

A method of preparing a membrane-electrode assembly for a fuel cell according to the present invention is characterised by forming a surface roughness on the coating layer by compressing a thin metal film with a surface roughness onto the coating layer and removing the thin metal film by treating the coating layer with acid to remove the thin metal film.

Preferable method steps of the invention are defined in the dependent claims numbers 2 to 14.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, given by way of example only and taken in conjunction with the accompanying drawings of which:
FIG. 1 is a schematic cross-sectional view showing a membrane-electrode assembly prepared according to an embodiment of the present invention;
FIG. 2 is a schematic diagram showing the structure of a fuel cell system in which a membrane-electrode assembly prepared according to one embodiment of the present invention can be used;
FIG. 3 is a graph showing a differential scanning calorimeter measurement of a first proton conductive polymer according to Example 1;
FIG. 4 is a graph showing a differential scanning calorimeter measurement of a second proton conductive polymer according to Example 1;
FIG. 5 is a scanning electron microscope (SEM) photograph of a cross-section of a membrane-electrode assembly according to Example 1;
FIG. 6 is an SEM photograph of a cross-section of a membrane-electrode assembly according to Comparative Example 1;
FIG. 7 is a graph showing voltage changes depending on a current density of a fuel cell according to Example 1 and Comparative Example 1; and
FIG. 8 is a graph showing electric power changes depending on a current density of a fuel cell according to Example 1 and Comparative Example 1.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

A membrane-electrode assembly of a fuel cell comprises a polymer electrolyte membrane, an anode, and a cathode, with the polymer electrolyte membrane disposed between the anode and the cathode. The membrane-electrode assembly generates electricity through the oxidation of a fuel and the reduction of an oxidant. The electricity generating reaction, at a membrane-electrode assembly, actively occurs when the polymer electrolyte membrane has an excellent interface adhesion with the electrodes, and also a large contact area at the interface therewith.

Accordingly, in order to increase the contact area between the polymer electrolyte membrane and an electrode, it has been suggested to form a surface roughness, on the polymer electric membrane. The surface roughness can be formed by a physical method, such as, compressing the polymer electrolyte membrane, and the like. However, a polymer electrolyte membrane having a surface roughness produced in this way can swell when it absorbs water generated during the operation of the fuel cell, which may transform, or otherwise diminish, the surface roughness.

However, according to one embodiment of the present invention, a coating layer is formed on a substrate, and a micro-level fine surface roughness is formed on the coating layer by using a thin metal film, so that the coating layer cannot be transformed or destroyed, due to the swelling of a polymer electrolyte membrane. Accordingly, aspects of the present invention can increase the adhesion of and the contact area of, the interface between the polymer electrolyte membrane and the catalyst layer, thereby improving the power characteristics of a fuel cell.

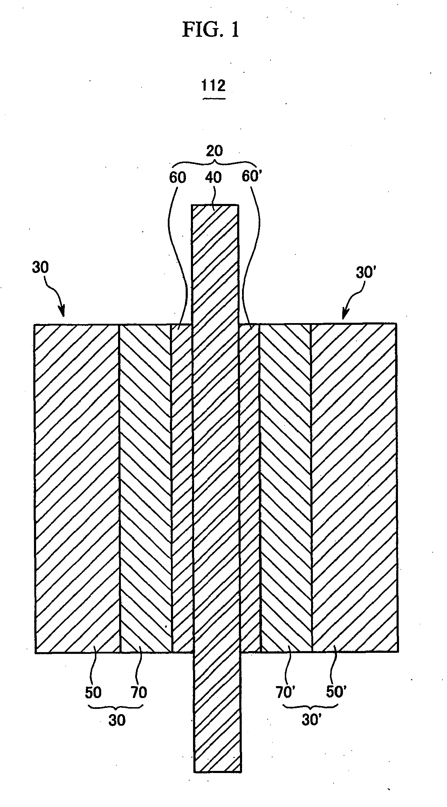

FIG. 1 is a schematic cross-sectional view showing a membrane-electrode assembly prepared according to an embodiment of the present invention. Referring to FIG. 1, a membrane-electrode assembly 112, for use as an electrode for a fuel cell includes a polymer electrolyte membrane 20 and electrodes 30 and 30' disposed at both sides of the polymer electrolyte membrane 20. The polymer electrolyte membrane 20 includes a first proton conductive polymer substrate 40 and coating layers 60 and 60'. The coating layers 60 and 60' are disposed on opposing sides of the substrate, and include a second proton conductive polymer. The coating layers 60 and 60' have a surface roughness (not shown), to increase their reaction surface areas with the electrodes 30 and 30', and to improve their power characteristics. In addition, the electrodes 30 and 30' include electrode substrates 50 and 50', and catalyst layers 70 and 70', formed thereon.

The first proton conductive polymer substrate 40 in the polymer electrolyte membrane functions as an ion exchanger by delivering a proton, produced at the catalyst layer 70 of the anode, to the catalyst layer 70' of the cathode.

The first proton conductive polymer substrate 40 may include any polymer resin having a cation exchange group selected from the group consisting of a sulfonic acid group, a carboxylic acid group, a phosphoric acid group, a phosphonic acid group, and derivatives thereof. Non-limiting examples of the polymer resin include at least one proton conductive polymer selected from the group consisting of fluoro-based polymers, benzimidazole-based polymers, polyimide-based polymers, polyetherimide-based polymers, polyphenylenesulfide-based polymers, polysulfone-based polymers, polyethersulfone-based polymers, polyetherketone-based polymers, polyether-etherketone-based polymers, and polyphenylquinoxaline-based polymers. In one embodiment, the proton conductive polymer is at least one selected from the group consisting of poly(perfluorosulfonic acid), poly(perfluorocarboxylic acid), a copolymer of tetrafluoroethylene and fluorovinylether including a sulfonic acid group, defluorinated polyetherketone sulfide, aryl ketone, poly(2,2'-(m-phenylene)-5,5'-bibenzimidazole), or poly (2,5-benzimidazole).

In addition, when the perfluorosulfonic acid (trade name: NAFION) is used for the first proton conductive polymer substrate 40, X, in an ion exchange group (-SO3X) at a terminal end of a side chain, may be replaced with an ion selected from the group consisting of a univalent ion such as sodium, potassium, cesium, and the like, a tetrabutylammonium ion, and a combination thereof. The substitution of an ion exchange group (-SO3X), at the terminal end of the side chain, increases the thermal stability of the fuel cell. Accordingly, even when a substrate is heat-treated, at a high temperature of over 200°C, during a hot-pressing process for fabricating a membrane-electrode assembly, a polymer resin therein does not deteriorate, and thereby, the lifespan of the fuel cell does not decrease. In addition, a first proton conductive polymer substrate, having an ion exchange group substituted with an ion such as sodium, potassium, cesium, tetrabutylammonium, or the like, for example, a sodium-type first proton conductive polymer substrate 40, is re-sulfonized when a catalyst layer is treated with a sulfonic acid, and thereby, changes into a proton-conductive substrate.

The coating layers 60 and 60' are disposed on opposing sides of the first proton conductive polymer substrate 40, to improve the interaction between the substrate 40 and the catalyst layers 70 and 70'.

The coating layers 60 and 60' include a second proton conductive polymer. The second proton conductive polymer may be one of the polymers as exemplified for the first proton conductive polymer. Accordingly, the coating layers 60 and 60' increase interface adhesion between the first proton conductive polymer substrate 40 and the catalyst layers 70 and 70'.

However, the second proton conductive polymer has an endothermic peak at a lower temperature range than that of the first proton conductive polymer, when both are measured with a differential scanning calorimeter (DSC). The second proton conductive polymer may have an endothermic peak at a temperature ranging from 100 to 115°C, while the first proton conductive polymer may have an endothermic peak at a temperature ranging from 120 to 150°C.

For example, the first polymer can include solid NAFION, and the second polymer can include liquid NAFION. An endothermic peak of the first proton conductive polymer, that is solid NAFION, is called a cluster transition peak, which depends on the molecular weight, the crystallinity of the polymer, and the water content therein. When the first proton conductive polymer passes through a drying step, during the manufacture of the membrane-electrode assembly, it may have decreased water content, and thereby, may have a hydrogen bond among sulfonic acid groups in the NAFION.

Accordingly, since the molecular chains are less mobile in the first proton conductive polymer, the first proton conductive polymer has an endothermic peak around 130°C . Subsequently, the size of the ion channels, in the first conductive polymer, decreases, thereby deteriorating the ion conductivity. On the other hand, when the first proton conductive polymer has too much water, it has an endothermic peak around 100°C, and makes the polymer electrolyte membrane substrate 40 wrinkle, which causes difficulties in manufacturing a membrane-electrode assembly, that is to say, loading a catalyst.

Unlike the first proton conductive polymer, that is, solid NAFION, the second proton conductive polymer, that is, liquid NAFION, has a low water content and molecular weight, and thereby has an endothermic peak around 100°C, even when it dries. However, when the second proton conductive polymer includes more water, it may have a peak at a lower temperature than noted above.

In addition, the second proton conductive polymer may have a 10 to 40% lower average molecular weight than the first proton conductive polymer. In some embodiments the second proton conductive polymer has a 15 to 35% lower average molecular weight. When the first and second polymers have a molecular weight difference within the above ranges, they may have an appropriate water swelling, and good movement of the polymer chains therein, improving adhesion to a catalyst. However, when their molecular weight difference is less than 10%, the first conductive polymer substrate has stronger characteristics than the second conductive polymer substrate, in terms of hardness, swelling, and chain movement, thereby relatively reducing adhesion to a catalyst. On the contrary, when their molecular weight difference is more than 40%, the first and second conductive polymer substrates may have too much swelling.

The above second proton conductive polymer is included in the coating layers 60 and 60', and the coating layers 60 and 60' have a surface roughness (not shown), to have an increased reaction surface area with the catalyst layers 70 and 70' of the electrodes, and thereby, higher power characteristics.

Specifically, the coating layers 60 and 60' may have an average surface roughness ranging from 50nm to 5µm and preferably, from 200nm to 3µm. When the coating layers 60 and 60' have an average surface roughness of less than 50nm, they may have little influence on increasing the surface area. In addition, this surface roughness may be removed when the polymer electrolyte membrane 20 is swollen, heat-treated, or pressure-treated, during the manufacture of the membrane-electrode assembly 112. In addition, when the coating layers 60 and 60' have a surface roughness of more than 5µm, the surface area can be increased too much, allowing the fuel to significantly cross over.

The surface roughness of the coating layers 60 and 60' is formed by using a thin metal film having a surface roughness, which may have been produced through an etching treatment. In other words, the surface roughness of the coating layers 60 and 60' corresponds to that of the thin metal film. The surface roughness of the thin metal film may be formed to have a predetermined pattern, so that the surface roughness of the coating layers 60 and 60' can have the same pattern.

A surface roughness formed on the coating layers 60 and 60' in this method can be finer than one formed in a conventional physical method, down to the micro-level. Accordingly, its reaction surface area with the catalyst layers 70 and 70' can be remarkably increased.

The substrate 40, and the coating layers 60 and 60', in the polymer electrolyte membrane 20, may have a thickness ratio of from 260:1 to 25:1, or preferably a thickness ratio of from 130:1 to 60:1. When the thickness ratio is within the above range, the fuel may not significantly cross-over, but the surface area of the polymer electrolyte membrane 20, contacting with the catalyst layers 70 and 70', may increase. However, when the thickness ratio is out of the above range, a fuel, such as methanol, may significantly cross-over, and a surface area may be minimally increased.

At least one of the anode 30 and the cathode 30', of the membrane-electrode assembly 112, includes electrode substrates 50 and 50', and catalyst layers 70 and 70' disposed on the electrode substrates 50 and 50'.

The electrode substrates 50 and 50' respectively support the anode 30 and the cathode 30', and provide a path for transferring the fuel and the oxidant to catalyst layers 70 and 70'. In one embodiment, the electrode substrates 50 and 50' are formed from a material such as carbon paper, carbon cloth, carbon felt, or a metal cloth (a porous film composed of a metal fiber or a metal film disposed on a surface of a cloth composed of polymer fibers). The electrode substrate is not limited thereto.

The electrode substrates 50 and 50' may be treated with a fluorine-based resin, to be water-repellent, and /or to prevent the loss of diffusion efficiency due to water generated during operation of the fuel cell. The fluorine-based resin may include polyvinylidene fluoride, polytetrafluoroethylene, polyhexafluoro propylene, polyperfluoroalkylvinylether, polyperfluoro sulfonylfluoride alkoxyvinyl ether, fluorinated ethylene propylene, polychlorotrifluoro ethylene, or copolymers thereof, but is not limited thereto.

A microporous layer (not shown) can be added between the aforementioned electrode substrates 50 and 50' and the catalyst layers 70 and 70', to increase a reactant's diffusion. The microporous layer generally includes conductive powders having a particular particle diameter. The conductive powders may include, but are not limited to, carbon powder, carbon black, acetylene black, activated carbon, carbon fiber, fullerene, nano-carbon, or combinations thereof. The nano-carbon may include a material such as carbon nanotubes, carbon nanofiber, carbon nanowire, carbon nanohorns, carbon nanorings, or combinations thereof.

The microporous layer is formed by coating a composition, for example, a conductive powder, a binder resin, and a solvent, onto the conductive substrate. The binder resin may include, but is not limited to, polytetrafluoro ethylene, polyvinylidene fluoride, polyhexafluoro propylene, polyperfluoroalkylvinyl ether, polyperfluoro sulfonylfluoride alkoxy vinyl ether, polyvinyl alcohol, cellulose acetate, or copolymers thereof. The solvent may include, but is not limited to, an alcohol such as ethanol, isopropyl alcohol, n-propyl alcohol, butanol and so on, water, dimethyl acetamide, dimethyl sulfoxide, N-methylpyrrolidone, and tetrahydrofuran. The coating method may include, but is not limited to, screen printing, spray coating, doctor blade methods, gravure coating, dip coating, silk screening, painting, and so on, depending on the viscosity of the composition.

The catalyst layers 70 and 70' include catalysts that act to catalyze the related reactions (oxidation of an oxidant and reduction of a fuel).

The catalysts included in the catalyst layer may include any catalyst that can perform a fuel cell reaction, such as, a platinum-based catalyst. The platinum-based catalyst may comprise at least one selected from the group consisting of platinum, ruthenium, osmium, platinum-ruthenium alloys, platinum-osmium alloys, platinum-palladium alloys, platinum-M alloys (where M is a transition element selected from the group consisting of Ga, Ti, V, Cr, Mn, Fe, Co, Ni, Cu, Zn, Sn, Mo, W, Rh, Ru, and combinations thereof), and combinations thereof. More specifically, non-limiting examples of the platinum-based catalyst are selected from the group consisting of Pt, Pt/Ru, Pt/W, Pt/Ni, Pt/Sn, Pt/Mo, Pt/Pd, Pt/Fe, Pt/Cr, Pt/Co, Pt/Ru/W, Pt/Ru/Mo, Pt/Ru/V, Pt/Fe/Co, Pt/Ru/Rh/Ni, Pt/Ru/Sn/W, and combinations thereof.

Such a metal catalyst may be used in a form of a metal itself (black catalyst), or be supported on a carrier. The carrier may include carbon such as graphite, denka black, ketjen black, acetylene black, carbon nanotubes, carbon nanofiber, carbon nanowire, carbon nanoballs, or activated carbon, or an inorganic particulate such as alumina, silica, zirconia, or titania. The carbon can be generally used.

The catalyst layers 70 and 70' may include a binder resin to improve their adherence and proton transfer properties. The binder resin may be a proton conductive polymer resin having a cation exchange group selected from the group consisting of a sulfonic acid group, a carboxylic acid group, a phosphoric acid group, a phosphonic acid group, and derivatives thereof. Non-limiting examples of the polymer include at least one proton conductive polymer selected from the group consisting of fluoro-based polymers, benzimidazole-based polymers, polyimide-based polymers, polyetherimide-based polymers, polyphenylenesulfide-based polymers polysulfone-based polymers, polyethersulfone-based polymers, polyetherketone-based polymers, polyether-etherketone-based polymers, and polyphenylquinoxaline-based polymers. In some embodiments, the proton conductive polymer is at least one selected from the group consisting of poly(perfluorosulfonic acid), poly(perfluorocarboxylic acid), a copolymer of tetrafluoroethylene and fluorovinylether having a sulfonic acid group, defluorinated polyetherketone sulfide, aryl ketone, poly(2,2'-(m-phenylene)-5,5'-bibenzimidazole), or poly (2,5-benzimidazole).

The binder resin may be used singularly or as a mixture. Optionally, the binder resin may be used along with a non-conductive polymer to improve the adherence between a polymer electrolyte membrane and the catalyst layer. The amount of the binder resin used may be adjusted based on its required usage.

Non-limiting examples of the non-conductive polymer include polytetrafluoroethylene (PTFE), tetrafluoroethylene-hexafluoropropylene copolymers (FEP), tetrafluoroethylene-perfluoro alkyl vinylether copolymers (PFA), ethylene/tetrafluoroethylene (ETFE)), ethylenechlorotrifluoro-ethylene copolymers (ECTFE), polyvinylidene fluoride, polyvinylidene fluoride-hexafluoropropylene copolymers (PVdF-HFP), dodecyl benzene sulfonic acid, sorbitol, and combinations thereof.

A membrane-electrode assembly with the above structure can be fabricated by the following method.

A proton conductive polymer substrate is first prepared. Then, a coating layer including a proton conductive polymer is formed on the substrate.

A method of preparing the substrate is not particularly limited but may include any known method using a proton conductive polymer. In addition, the proton conductive polymer may be the same as described above.

The coating layer is formed by using a composition including a proton conductive polymer and a known coating method. The coating method may include screen printing, spray coating, doctor blade methods, gravure coating, dip coating, silk screening, painting, slot die coating, or the like, depending on viscosity of the composition. According to one embodiment, the coating method is spray printing.

Next, a thin metal film, having a surface roughness, is prepared to form a surface roughness on the coating layer. The surface roughness can be formed to have a predetermined pattern.

A method of forming a surface roughness on a thin metal film may include etching by an acid treatment, anodizing, compression by using a plastic substrate with a predetermined pattern, plaza treatment, sand papering, sand blasting, or the like. The thin metal film, selected from the group consisting of Al, Ni, Cu, and Fe, is etched with an acid solution to form a surface roughness. This method can make it possible to form a surface roughness down to a micro-level, which is finer than a conventional level.

The acid may include an acid selected from the group consisting of hydrochloric acid, sulfuric acid, nitric acid, HF, and a combination thereof. When it is used to treat a thin metal film, its concentration should be in a range of from 0.01 to 1N, and preferably, in a range of from 0.1 to 1N. When an acid solution has a concentration of less than 0.01N, it may have little etching effect, while when it is more than 1N, it may have an excessive etching effect, causing problems in forming an appropriate surface roughness.

In addition, the acid treatment may be performed for from 10 minutes to 1 hour, and preferably, for from 20 to 30 minutes. When the treatment time is less than 10 minutes, it may be too short to form an appropriate surface roughness, while when it is more than 1 hour, it may cause excessive etching, causing problems in forming a micro-level surface roughness.

A thin metal film having a surface roughness is positioned at one side of a polymer electrolyte membrane substrate with a coating layer, and thereafter, compressed together with a pressure of 1000 to 3000 kg/m² (9.8 10³ to 29.4 10³ Pa); and preferably, with a pressure of 1500 to 2000 kg/m² (14.7 10³ to 19.6 10³ Pa). When the pressure is less than 1000 kg/m² (9.8·10³ Pa), a surface roughness may not be uniformly transcribed on the surface of a membrane, when the pressure is more than 3000 kg/m² (29.4·10³ Pa), the excessive pressure may destroy the surface roughness.

A thin metal film adhered to a coating layer is treated with an acid solution to remove the thin metal film, preparing a polymer electrolyte membrane.

This acid solution treatment can dissolve and/or remove the thin metal film, without affecting the surface roughness. The acid solution may include the same as used for forming the surface roughness on the thin metal film.

The surface roughness may be formed on only one coating layer disposed at both sides of a polymer electrolyte membrane, but preferably, it is formed on both coating layers.

The acid solution remaining in a polymer electrolyte membrane can be removed in an additional pre-treatment operation. For example, the polymer electric membrane can be pretreated with an aqueous hydrogen peroxide solution, and also a sulfuric acid solution in a low concentration, and thereafter, washed with distilled water.

A membrane-electrode assembly for a fuel cell is fabricated by attaching an anode and a cathode at both sides of the prepared polymer electrolyte membrane. The anode and the cathode in the membrane-electrode assembly are fabricated by assembling an electrode substrate with a polymer electrolyte membrane after forming a catalyst layer on the polymer electrolyte membrane or by assembling an electrode substrate having a catalyst layer with a polymer electrolyte membrane.

The catalyst layer can be formed in a direct or transfer coating method. When a direct coating method is employed, a catalyst layer is formed by directly coating a composition for forming a catalyst layer on an electrode substrate or a polymer electrolyte membrane, and then drying it. Herein, the coating process may include one selected from the group consisting of screen printing, spray coating, doctor blade methods, gravure coating, dip coating, silk screening, painting, slot dying, and a combination thereof, depending on viscosity of the composition, but is not limited thereto.

When a transfer coating method is employed, a catalyst layer is formed by coating a composition for forming a catalyst layer, on a releasing film, and drying. Then, the catalyst layer is transcribed onto an electrode substrate, or a polymer electrolyte membrane, by thermal compression.

The releasing film may include an about 200µm thick fluorine-based polymer film, such as polytetrafluoroethylene (PTFE), a tetrafluoroethylene-hexafluoropropylene copolymer (FEP), a tetrafluoroethylene-perfluoroan alkylvinylether copolymer (PFA), ethylene/tetrafluoroethylene (ETFE), and the like, or a fluorine-based polymer film, such as, polyimide (KAPTON® DuPont Co,), and polyester (MYLAR® DuPont Co.). The process of coating the releasing film, with a composition for forming a catalyst layer, may include the same processes as described above.

The transfer process is performed by disposing a catalyst layer, formed on a releasing film, on a polymer electrolyte membrane, and thereafter, thermally compressing. The thermal compression may be performed at a temperature ranging from 100 to 250°C, or, from 100 to 200°C. In addition, the pressure during the thermal compression may be in a range of 300 to 2000psi, or from, 300 to 1500psi. When the temperature and pressure are within the above ranges, the catalyst layer can be accurately transcribed, when the temperature and pressure are out of the ranges, an inaccurate transfer may result, or the catalyst layer can have an excessively dense structure, which reduces the movement of a reactant into or out of the catalyst layer.

The electrode substrate and the catalyst layer are the same as described above. A method of assembling the electrode substrate, with a polymer electrolyte membrane, may include any suitable method, known in the art and therefore will not be described in detail.

Therefore, a membrane-electrode assembly fabricated in the above method can have an increased interface adherence and reaction surface area with a catalyst layer, thereby improving the power characteristics of a fuel cell. In addition, when the polymer electrolyte membrane is swollen, during the operation of the fuel cell, the surface roughness formed on a coating layer is not transformed or degraded.

A fuel cell system including a membrane-electrode assembly prepared according to the invention can be provided. Such fuel cell system includes: at least one electricity generating element, including the membrane-electrode assembly and a separator: a fuel supplier to supply the electricity generating element with a fuel, and an oxidant supplier to supply the electricity generating element with an oxidant.

The electricity generating element includes a membrane-electrode assembly and a separator (also, referred to as a bipolar plate), and generates electricity through the oxidation of the fuel and the reduction of the oxidant.

The fuel supplier is to supply the electricity generating element with the fuel, and the oxidant supplier is to supply the electricity generating element with the oxidant. The oxidant includes oxygen or air. The fuel includes liquid or gaseous hydrogen, or a hydrocarbon-based fuel such as methanol, ethanol, propanol, butanol, or natural gas.

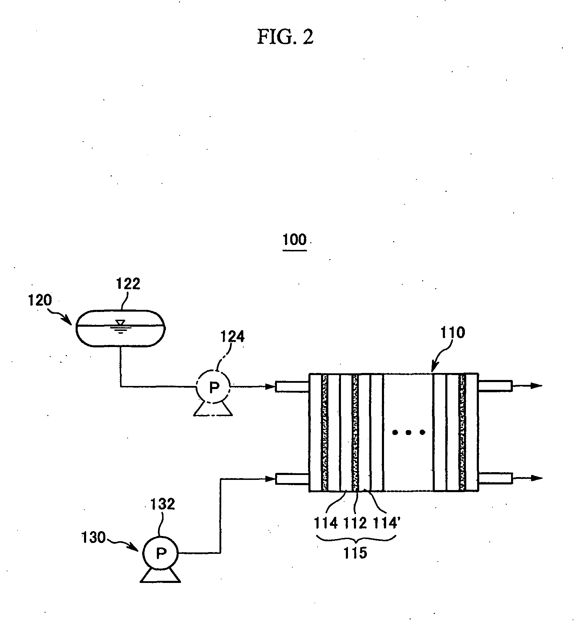

FIG. 2 illustrates a fuel cell system 100, wherein the fuel and the oxidant are provided to an electricity generating element 115, through pumps 124 and 132, but the present invention is not limited to such a structure. The fuel cell system 100, may alternatively include a structure to provide the fuel and the oxidant through diffusion.

The electricity generating element 115 generates electrical energy through an electrochemical reaction of the fuel and the oxidant. The fuel system 100 can further comprise a fuel supplier 120 to supply the fuel to the electricity generating element 115, and an oxidant supplier 130 to supply the oxidant to the electricity generating element 115.

In addition, the fuel supplier 120 can comprise a tank 122 to store the fuel, and a fuel pump 124 that is connected therewith. The fuel pump 124 is to supply the fuel stored in the tank 122 to the electricity generating element 115.

The oxidant supplier 130, which supplies the electricity generating element 115 with the oxidant, is equipped with at least one pump 132 to supply the oxidant to the electricity generating element 115.

The electricity generating element 115 includes: a membrane-electrode assembly 112 to oxidize the fuel and reduce the oxidant; and separators 114 and 114' that are respectively positioned at opposite sides of the membrane-electrode assembly 112, and supply the fuel, and the oxidant, respectively. The fuel cell system 100 comprises a stack 110. The stack 100 comprises at least one electricity generating element 115.

The following examples illustrate the present invention in more detail. However, it is understood that the present invention is not limited by these examples.

### Example 1

A commercially available NAFION 115 membrane (molecular weight: 500,000 to 800,000) used as the first proton conductive polymer substrate, was treated with 3% hydrogen peroxide, at 90°C, and with a 0.5M sulfuric acid aqueous solution, for 2 hours. Then, the membrane was washed with deionized water at 100°C for 1 hour, to prepare an H+ type NAFION 115 membrane (thickness 125µm). A commercial 5 wt% NAFION/H2O/2-propanol (Solution Technology Inc., molecular weight: 80,000 to 200,000) solution as the second proton conductive polymer was coated on one side of a NAFION 115 membrane, and formed a 2µm-thick coating layer.

An aluminum thin metal film was etch treated with a 0.1N hydrochloric acid solution for 20 minutes, to form a surface roughness, and then positioned on the coating layer, and pressed at 2000kg/m² (19.6·10³ Pa), to form a surface roughness on the coating layer. Then, the aluminum thin metal film was dissolved with a 0.5N hydrochloric acid solution. The membrane was washed, to remove the remaining hydrochloric acid solution, with distilled water, and thus, a polymer electrolyte membrane was prepared.

4.5g of a 10wt%-NAFION (NAFION®, Dupont Co.) aqueous dispersion solution was added to 3.0g of a Pt black catalyst (HISPEC® 1000, Johnson Matthey Plc.) and a Pt/Ru black (HISPEC® 6000, Johnson Matthey Plc.) catalyst. The mixture was then mechanically agitated, to prepare a composition for forming a catalyst layer.

The composition for forming a catalyst layer was direct-coated with a screenprinting method, on one side of the polymer electrolyte membrane. Herein, the area for forming a catalyst layer was 5 X 5cm2, and the catalyst was applied in an amount of 3mg/cm². The same process was performed on another side of the polymer electrolyte membrane, so that anode and cathode catalyst layers were formed on each side of the polymer electrolyte membrane.

Then, a commercially available electrode substrate (uncatalyzed gas diffusion electrode, SGL Carbon 31BC) was attached physically on each side of the polymer electrolyte membrane that included the catalyst layers to fabricate a membrane-electrode assembly. Then, the membrane-electrode assembly was interposed between gaskets, and also between two separators having a gas flow channel and a cooling channel, and then compressed between copper end plates, to fabricate a single cell.

### Comparative Example 1

A 125µm-thick NAFION 115 membrane was treated with 3% hydrogen peroxide at 90°C and with a 0.5M sulfuric acid aqueous solution for 2 hours. The membrane was then washed with deionized water at 90°C for 1 hour, to prepare an H+ type NAFION 115 membrane. Each side of the NAFION 115 membrane was roughened with sandpaper to form a surface roughness.

4.5g of a 10wt%-NAFION (NAFION®, Dupont Co.) aqueous dispersion solution was added to 3.0g of a Pt black catalyst (HISPEC® 1000, Johnson Matthey Plc.) and a Pt/Ru black (HISPEC® 6000, Johnson Matthey Plc.) catalyst. The mixture was then mechanically agitated to prepare a composition for forming a catalyst layer.

The composition for forming a catalyst layer was direct-coated, with a screenprinting method, on one side of the polymer electrolyte membrane. Herein, the area for forming a catalyst layer was 5 X 5cm², and the catalyst was applied in an amount of 3mg/cm². The same process was performed on the other side of the polymer electrolyte membrane, so that anode and cathode catalyst layers were formed at each side of the polymer electrolyte membrane.

A commercially available electrode substrate (uncatalyzed gas diffusion electrode, SGL Carbon 31BC) was attached physically to each side of the polymer electrolyte membrane that included the catalyst layers, to fabricate a membrane-electrode assembly. Then, the membrane-electrode assembly was interposed between gaskets and also between two separators having gas flow channels and cooling channels, and then compressed between copper end plates to fabricate a single cell.

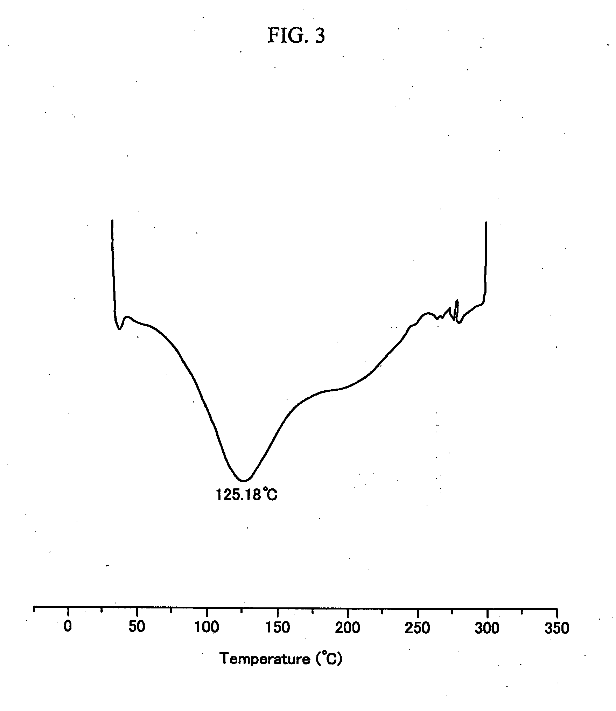

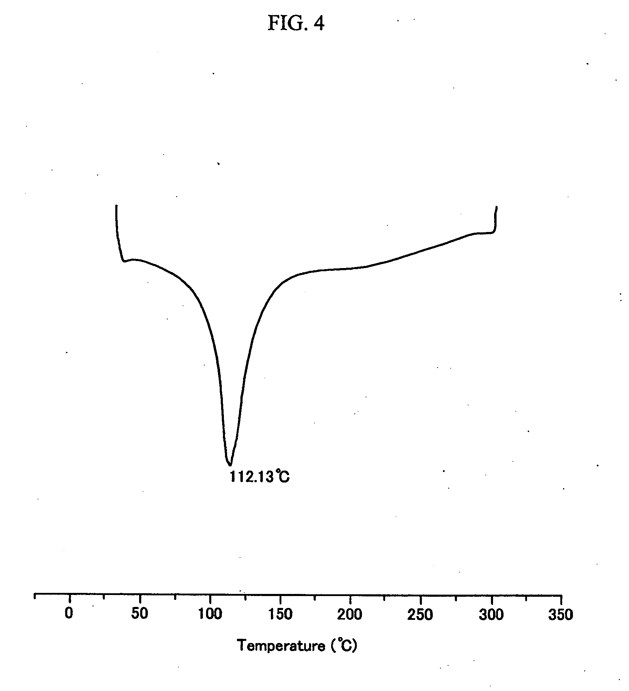

With respect to the first proton conductive polymer and the second proton conductive polymer, according to Example 1, endothermic peaks were measured by DSC. The results are provided in FIGS. 3 and 4.

FIG. 3 is a graph illustrating the DSC measurement of the first proton conductive polymer, and FIG. 4 is a graph illustrating the DSC measurement of the second proton conductive polymer.

As shown in FIG. 3 and FIG. 4, the first proton conductive polymer has an endothermic peak at 125°C, and the second proton conductive polymer has an endothermic peak around 100°C in the DSC measurement.

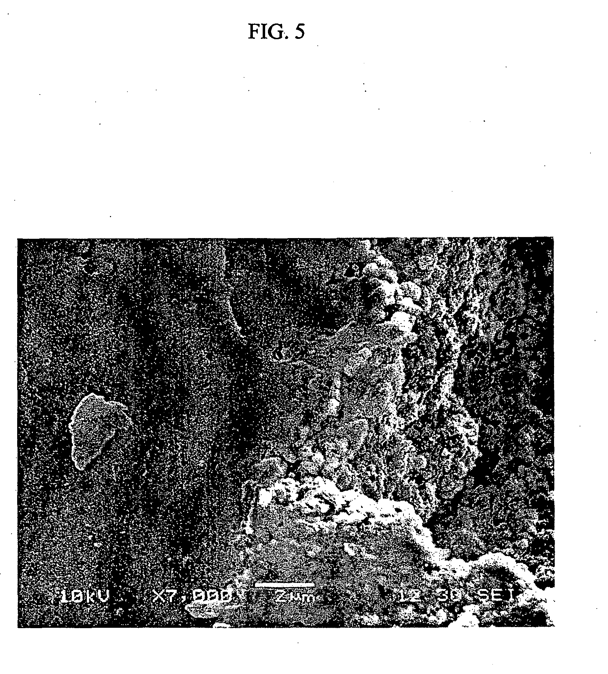

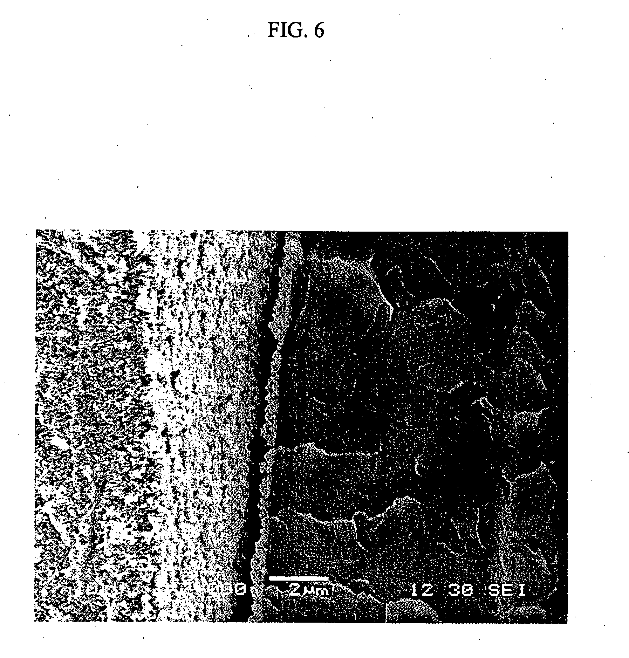

To compare cross-sections of the membrane-electrode assemblies that were prepared according to Example 1, and Comparative Example 1, SEM micrographs were taken. The results are provided in FIGS. 5 and 6.

FIG. 5 is a micrograph showing a cross-section of the membrane-electrode assembly according to Example 1, and FIG. 6 is a photograph of a cross-section of the membrane-electrode assembly according to Comparative Example 1. The left parts of FIGS. 5 and 6 correspond to a polymer electrolyte membrane, and the right parts correspond to a catalyst layer.

As shown in FIGS. 5 and 6, the membrane-electrode assembly according to Example 1, which formed a catalyst layer after forming a surface roughness on a polymer electrolyte membrane, was not separated at the interface between the coating layer and the catalyst layer. However, the membrane-electrode assembly according to Comparative Example 1, without a coating layer, was separated at the interface between the polymer electrolyte membrane and the catalyst layer. From the results, it is expected that the membrane-electrode assembly according to Example 1 has an excellent interaction between a polymer electrolyte membrane and a catalyst layer, and so can implement excellent fuel cell performance.

With respect to the coating layer of the membrane-electrode assembly according to Example 1, and the polymer electrolyte membrane according to Comparative Example 1, surface roughness was measured by an atomic force microscope (AFM). The results are provided in the following Table 1.

In addition, while 1M methanol and dry air was supplied to single cells according to Example 1, and Comparative Example 1, the single cells were operated at 70°C for 10 hours, to measure power density. The results are also provided in the following Table 1.

**Table 1**

| | Surface roughness | Power density (mW/cm², 0.4V, 70°C) |
|---|---|---|
| Example 1 | 50nm to 1µm | 140 |
| Comparative Example 1 | 2 µm to 3 µm | 113 |

As shown in Table 1, the polymer electrolyte membrane according to Example 1, had a finer surface roughness than the polymer electrolyte membrane according to Comparative Example 1. The single cell, including a coating layer having a micro-patterned surface roughness according to Example 1, showed a higher operating voltage than Comparative Example 1, under the same operating conditions. The results also show that the single cell of Example 1 had improved power characteristics, as compared to those of Comparative Example 1.

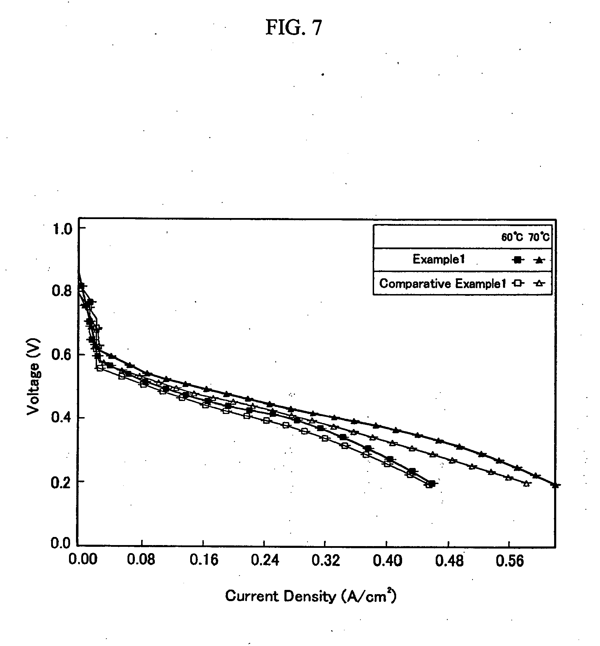

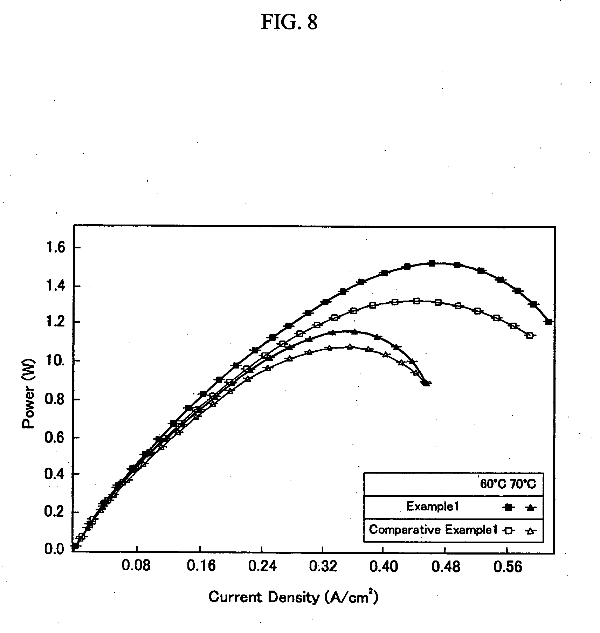

With respect to the single cells of Example 1 and Comparative Example 1, voltage and electric power changes were measured depending on the current density change according to the same method, except that the single cells were operated at 60 and 70°C. The results are provided in FIGS. 7 and 8.

FIG. 7 is a graph showing voltage changes depending on the current density of the single cells according to Example 1, and Comparative Example 1, and FIG. 8 is a graph showing electric power changes depending on the current density of the single cells according to Example 1 and Comparative Example 1.

As shown in FIGS. 7 and 8, -■- corresponds to results for the single cell of Example 1, at 60°C, -▲- corresponds to results for the single cell of Example 1, at 70°C, -□- corresponds to results for the single cell of Comparative Example 2, at 60°C, and -□ - corresponds to results for the single cell of Comparative Example 1, at 70°C.

Comparing the voltage characteristics according to a current density, as shown in FIG. 7, the single cell of Example 1 had a smaller voltage decrease than the single cell of Comparative Example 1, at both 60 and 70°C.

Further, from the comparison of electric power changes according to a current density, as shown in FIG. 8, the single cell of Example 1 had excellent electric power characteristics as compared to those of Comparative Example 1, at both 60 and 70°C. Based on the results, the single cell of Example 1 had an increased interface adherence and reaction surface area between the polymer electrolyte membrane and the catalyst layer, so that it had improved power characteristics as compared to those of Comparative Example 1.

A membrane-electrode assembly prepared according to the method of the present invention can improve fuel cell power characteristics by increasing an interface adherence, and a reaction surface area, between a polymer electrolyte membrane and a catalyst layer.

Although a few embodiments of the present invention have been shown and described, it would be appreciated by those skilled in the art that changes may be made in this embodiment without departing from the invention as defined in the claims.

## Claims

1. A method of preparing a membrane-electrode assembly for a fuel cell comprising preparing a polymer electrolyte membrane (20), having a first endothermic peak and comprising a first proton conductive polymer substrate (40), by forming a coating layer (60,60') comprising a second proton conductive polymer having a second endothermic peak on at least one side of the first proton conductive polymer substrate (40); the first endothermic peak occurring in a higher temperature range than the second endothermic peak, as measured by a differential scanning calorimeter, and forming a surface roughness on the coating layer (60,60') before assembling the polymer electrolyte membrane (20) between an anode (30) and a cathode (30'), **characterised by** forming a surface roughness on the coating layer (60,60') by compressing a thin metal film with a surface roughness onto the coating layer and removing the thin metal film by treating the coating layer with acid to remove the thin metal film.

2. The method of claim 1, wherein the surface roughness of the thin metal film is formed using a method selected from the group consisting of an etching treatment using an acid solution, anodizing, compression using a substrate with a predetermined pattern, plasma treatment, sand papering, sand blasting, and combinations thereof.

3. The method of claim 2, comprising the step of forming a surface roughness on the thin metal film by etching using an acid solution.

4. The method of claim 3, wherein the etching step includes selecting an acid solution from the group consisting of hydrochloric acid, sulfuric acid, nitric acid, fluoric acid, and a mixture thereof.

5. The method of claim 4, wherein the etching step includes selecting an acid solution having a concentration of 0.01 to 1N.

6. The method of any of claims 1 to 5, wherein the compression- step is--carried at a pressure of from 1000 to 3000kg/m² (from 9.8 10³ Pa to 29.4 10³ Pa).

7. The method of any preceding claim, wherein the step of assembling the polymer electrolyte membrane comprises joining a polymer electrolyte membrane having a catalyst layer to an electrode substrate, or joining an electrode substrate having a catalyst layer to a polymer electrolyte membrane.

8. The method according to any of claims 1 to 7, including the step of selecting a first proton conductive polymer substrate (40) which has a 10 to 40% higher average molecular weight than that of the second proton conductive polymer.

9. The method according to any preceding claim, including the step of applying the coating layer (60,60') in a pattern.

10. The method according to any preceding claim, including the step of applying the coating layer (60,60') to two sides of the substrate.

11. The method of any preceding claim, including the step of selecting a first proton conductive polymer substrate (40) that comprises a polymer resin comprising a cation exchange group selected from the group consisting of a sulfonic acid group, a carboxylic acid group, a phosphoric acid group, a phosphonic acid group, and derivatives thereof.

12. The method of any preceding claim, including the step of selecting a substrate and the coating layer (60,60') so that they have a thickness ratio of from 260:1 to 25:1.

13. The method of any preceding claim, including contacting the surface roughness of the coating layer (60,60') with the anode and/or the cathode.

14. The method of any preceding claim, including the step of selecting the thin film from at least one of the group consisting of Al, Ni, Cu, Fe, and combinations thereof.

## Patentansprüche

1. Ein Verfahren zur Herstellung einer Membran-Elektroden-Anordnung für eine Brennstoffzelle, umfassend Herstellen einer Polymerelektrolytmembran (20), die einen ersten endothermen Peak aufweist und ein erstes protonenleitendes Polymersubstrat (40) umfasst, durch Ausbilden einer Beschichtungsschicht (60,60'), die ein zweites protonenleitendes Polymer mit einem zweiten endothermen Peak umfasst, auf mindestens einer Seite des ersten protonenleitenden Polymersubstrats (40); wobei der erste endotherme Peak in einem höheren Temperaturbereich als der zweite endotherme Peak auftritt, wie durch ein Differentialabtastkalorimeter gemessen, und Ausbilden einer Oberflächenrauigkeit auf der Beschichtungsschicht (60,60') vor dem Zusammenfügen der Polymerelektrolytmembran (20) zwischen einer Anode (30) und einer Kathode (30'), **gekennzeichnet durch** Ausbilden einer Oberflächenrauigkeit auf der Beschichtungsschicht (60,60') **durch** Komprimieren eines dünnen Metallfilms mit einer Oberflächenrauigkeit auf die Beschichtungsschicht und Entfernen des dünnen Metallfilms **durch** Behandeln der Beschichtungsschicht mit Säure, um den dünnen Metallfilm zu entfernen.

2. Das Verfahren nach Anspruch 1, wobei die Oberflächenrauigkeit des dünnen Metallfilms unter Verwendung eines aus der aus einer Ätzbehandlung unter Verwendung einer Säurelösung, Anodisieren, Komprimieren unter Verwendung eines Substrats mit einem vorbestimmten Muster, Plasmabehandlung, Schleifen, Sandstrahlen und Kombinationen derselben bestehenden Gruppe ausgewählten Verfahrens ausgebildet wird.

3. Das Verfahren nach Anspruch 2, umfassend den Schritt des Ausbildens einer Oberflächenrauigkeit auf dem dünnen Metallfilm durch Ätzen unter Verwendung einer Säurelösung.

4. Das Verfahren nach Anspruch 3, wobei der Ätzschritt Auswählen einer Ätzlösung aus der aus Salzsäure, Schwefelsäure, Salpetersäure, Fluorwasserstoffsäure und einer Mischung derselben bestehenden Gruppe beinhaltet.

5. Das Verfahren nach Anspruch 4, wobei der Ätzschritt Auswählen einer Säurelösung mit einer Konzentration zwischen 0,01 und 1N beinhaltet.

6. Das Verfahren nach irgendeinem der Ansprüche 1 bis 5, wobei der Kompressionsschritt bei einem Druck von 1000 bis 3000kg/m² (von 9,8 10³ Pa bis 29,4 10³ Pa) durchgeführt wird.

7. Das Verfahren nach irgendeinem vorhergehenden Anspruch, wobei der Schritt des Zusammenfügens der Polymerelektrolytmembran Vereinen einer eine Katalysatorschicht aufweisenden Polymerelektrolytmembran mit einem Elektrodensubstrat oder Vereinen eines eine Katalysatorschicht aufweisenden Elektrodensubstrats mit einer Polymerelektrolytmembran umfasst.

8. Das Verfahren nach irgendeinem der Ansprüche 1 bis 7, beinhaltend den Schritt des Auswählens eines ersten protonenleitenden Polymersubstrats (40), das ein 10 bis 40% höheres durchschnittliches Molekulargewicht als das des zweiten protonenleitenden Polymers aufweist.

9. Das Verfahren nach irgendeinem vorhergehenden Anspruch, beinhaltend den Schritt des Aufbringens der Beschichtungsschicht (60,60') in einem Muster.

10. Das Verfahren nach irgendeinem vorhergehenden Anspruch, beinhaltend den Schritt des Aufbringens der Beschichtungsschicht (60,60') auf zwei Seiten des Substrats.

11. Das Verfahren nach irgendeinem vorhergehenden Anspruch, beinhaltend den Schritt des Auswählens eines ersten protonenleitenden Polymersubstrats (40), das ein Polymerharz umfasst, das eine aus der aus einer Sulfonsäuregruppe, einer Carbonsäuregruppe, einer Phosphorsäuregruppe, einer Phosphonsäuregruppe und Derivaten derselben bestehenden Gruppe ausgewählte Kationenaustauschgruppe umfasst.

12. Das Verfahren nach irgendeinem vorhergehenden Anspruch, beinhaltend den Schritt des Auswählens eines Substrats und der Beschichtungsschicht (60,60'), so dass sie ein Dickenverhältnis zwischen 260:1 und 25:1 aufweisen.

13. Das Verfahren nach irgendeinem vorhergehenden Anspruch, beinhaltend Kontaktieren der Oberflächenrauigkeit der Beschichtungsschicht (60,60') mit der Anode und/oder der Kathode.

14. Das Verfahren nach irgendeinem vorhergehenden Anspruch, beinhaltend den Schritt des Auswählens des Dünnfilms aus mindestens einem der aus Al, Ni, Cu, Fe und Kombinationen derselben bestehenden Gruppe.

## Revendications

1. Procédé de préparation d'un ensemble membrane-électrodes pour une pile à combustible comprenant le fait de préparer une membrane (20) à électrolyte polymère, ayant une première pointe endothermique et comprenant un premier substrat (40) à polymère conducteur de protons, en formant une couche de revêtement (60, 60') comprenant un deuxième polymère conducteur de protons ayant une deuxième pointe endothermique sur au moins un côté du premier substrat (40) à polymère conducteur de protons ; la première pointe endothermique se produisant dans une plage de température plus élevée que la deuxième pointe endothermique, telle qu'on la mesure par un calorimètre à balayage différentiel, et en formant une rugosité de surface sur la couche de revêtement (60, 60') avant d'assembler la membrane (20) à électrolyte polymère entre une anode (30) et une cathode (30'), **caractérisé par** le fait de former une rugosité de surface sur la couche de revêtement (60, 60') en comprimant un film métallique mince avec une rugosité de surface sur la couche de revêtement et en retirant le film métallique mince en traitant la couche de revêtement avec de l'acide afin de retirer le film métallique mince.

2. Procédé de la revendication 1, dans lequel la rugosité de surface du film métallique mince est formée en utilisant un procédé sélectionné à partir du groupe constitué d'un traitement de décapage utilisant une solution acide, d'une anodisation, d'une compression utilisant un substrat avec un motif prédéterminé, d'un traitement au plasma, d'un ponçage, d'un sablage, et de leurs combinaisons.

3. Procédé de la revendication 2, comprenant l'étape qui consiste à former une rugosité de surface sur le film métallique mince par décapage en utilisant une solution acide.

4. Procédé de la revendication 3, dans lequel l'étape de décapage comporte la sélection d'une solution acide du groupe constitué d'acide hydrochlorique, d'acide sulfurique, d'acide nitrique, d'acide fluorhydrique, et de leurs mélanges.

5. Procédé de la revendication 4, dans lequel l'étape de décapage comporte le fait de sélectionner une solution acide ayant une concentration de 0,01 à 1N.

6. Procédé de l'une des revendications 1 à 5, dans lequel l'étape de compression est exécutée à une pression allant de 1000 à 3000kg/m² (de 9,8 10³Pa à 29,4 10³Pa).

7. Procédé de l'une des revendications précédentes, dans lequel l'étape d'assemblage de la membrane à électrolyte polymère comprend le fait de lier une membrane à électrolyte polymère ayant une couche catalytique à un substrat d'électrodes, ou de lier un substrat d'électrodes ayant une couche catalytique à une membrane à électrolyte polymère.

8. Procédé selon l'une des revendications 1 à 7, comportant l'étape qui consiste à sélectionner un premier substrat (40) à polymère conducteur de protons qui a un poids moléculaire moyen plus élevé de 10 à 40% que celui du deuxième polymère conducteur de protons.

9. Procédé selon l'une des revendications précédentes, comportant l'étape qui consiste à appliquer la couche de revêtement (60, 60') selon un motif.

10. Procédé selon l'une des revendications précédentes, comportant l'étape qui consiste à appliquer la couche de revêtement (60, 60') sur deux côtés du substrat.

11. Procédé de l'une des revendications précédentes, comportant l'étape qui consiste à sélectionner un premier substrat (40) à polymère conducteur de protons qui comprend une résine polymère comprenant un groupe échangeur de cations sélectionné à partir du groupe constitué d'un groupe d'acide sulfonique, d'un groupe d'acide carboxylique, d'un groupe d'acide phosphorique, d'un groupe d'acide phosphonique, et de leurs dérivés.

12. Procédé de l'une des revendications précédentes, comportant l'étape qui consiste à sélectionner un substrat et la couche de revêtement (60, 60') de sorte qu'ils aient un rapport d'épaisseur allant de 260:1 à 25:1.

13. Procédé de l'une des revendications précédentes, comportant le fait de mettre en contact la rugosité de surface de la couche de revêtement (60, 60') avec l'anode et/ou la cathode.

14. Procédé de l'une des revendications précédentes, comportant l'étape qui consiste à sélectionner le film mince à partir d'au moins l'un du groupe constitué de Al, Ni, Cu, Fe, et de leurs combinaisons.
